# EUROPEAN PATENT SPECIFICATION

(11) **EP 2 707 976 B1**
(45) Date of publication and mention of the grant of the patent: **28.02.2018**
(21) Application number: 11722630.8
(22) Date of filing: 13.05.2011
(51) Int. Cl.: H04J 3/06, H04W 84/04, H04B 7/26

(54) **TIME SYNCHRONISATION IN A COMMUNICATION NETWORK**
ZEITSYNCHRONISIERUNG IN EINEM KOMMUNIKATIONSNETZ
SYNCHRONISATION TEMPORELLE DANS UN RÉSEAU DE COMMUNICATION

(43) Date of publication of application: 19.03.2014
(73) Proprietor: Telefonaktiebolaget LM Ericsson (publ), 164 83 Stockholm (SE)
(72) Inventor: NYLANDER, Tomas, S-139 34 Värmdö (SE); VIKBERG, Jari, S-153 38 Järna (SE); HEDBERG, Tomas, S-112 69 Stockholm (SE)
(74) Representative: Brann AB
(86) International application number: PCT/SE2011/050607
(87) International publication number: WO 2012/158074

(56) References cited:
- GB-A- 2 454 937
- US-A1- 2007 177 605
- US-A1- 2010 074 180
- JUNGNICKEL V ET AL: "Synchronization of cooperative base stations", WIRELESS COMMUNICATION SYSTEMS. 2008. ISWCS '08. IEEE INTERNATIONAL SYMPOSIUM ON, IEEE, PISCATAWAY, NJ, USA, 21 October 2008 (2008-10-21), pages 329-334, XP031380352, ISBN: 978-1-4244-2488-7

## Description

### Technical field

Embodiments herein relate generally to synchronisation of entities in a communication network, and in particular to synchronisation functions in heterogeneous communication networks.

### Background

In a cellular communication network, there will always be areas with high traffic, i.e. high concentration of users. In those areas, there is a risk of traffic overload, which may result in that certain users or mobile terminals will not receive service by the communication network. In order to overcome such a scenario, one solution is to deploy additional capacity to keep the user satisfaction. The added capacity could then be in the form of additional macro base station or to deploy nodes with lower output power and thus covering a smaller area in order to concentrate the capacity boost on a smaller area.

In a cellular communication network, there will also be areas with bad coverage where there is a need for coverage extension, and again one way to do that is to deploy a node with low output power to concentrate the coverage boost in a small area.

One argument for choosing nodes with lower output power in the above cases is that the impact on the macro network can be minimized, e.g. it is a smaller area where the macro network may experience interference. These low power nodes could for example be pico, micro or femto base stations, and the name mainly indicates their output power and thus coverage.

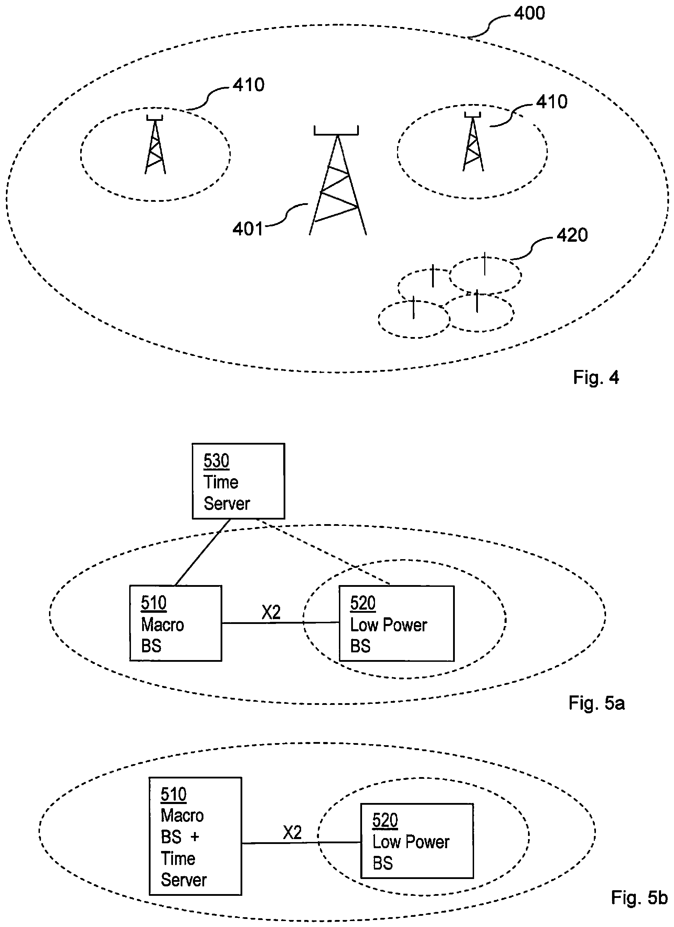

Figure 4 illustrates a macro base station 401, which provides a wide area coverage of cell 400 (also called macro cell). Then low power nodes are deployed to provide small area capacity/coverage. In the example illustrated in figure 4, there are pico base stations 410 and home base stations 420 (femto cells). Another example of low power nodes is so called micro base stations (not shown in figure 4). These kinds of networks are often referred to as heterogeneous networks (HetNets) or multilayer networks.

With HetNet or multilayer network, there is a need to coordinate between the macro nodes and the low power nodes, especially to handle interference. For example a low power node needs to provide what is called Almost Blank Subframes (ABS), meaning time and frequency instances where the low power node is silent so that the macro node can communicate with UEs under its control. One way to achieve synchronization is to use packet based synchronization, i.e. synchronize on the IP network, for example using Network Time Protocol (NTP) and related synchronization/time servers in the network. Another way is to use Precision Time Protocol (PTP) and related synchronization/time servers. NTP is defined in IETF and PTP is based on IEEE 1588 specifications.

Another problem with regards to HetNets or multilayer networks and low power nodes is that a high number of nodes are expected. This means that an extensive Operation and Maintenance (O&M) effort is needed to configure the low power nodes with information about which time servers to use in order to obtain timing or synchronization information. US 2007/177605 A1 relates to a method for utilizing a backup timing source when GPS becomes nonfunctional. GB 2454937 A relates to acquiring time references for a telecommunications base station from a time server. US 2010/0074180 A1 relates to synchronizing a base station in a wireless communication system. Jungnickel V et al : "Synchronization of Cooperative Base Stations", Wireless communication systems, 2008, ISWCS'08, IEEE International Symposium ON, IEEE Piscataway, NJ, USA, 21 October 2008 (2008-10-21 pages 329-334 relates to the synchronization of cooperative base stations.

### Summary

It is an object of the exemplifying embodiments to address at least some of the problems outlined above. In particular, it is an object of the exemplifying embodiments to provide a first base station and a second base station and respective methods therein for enabling communication between the first base station and the second base station, wherein one of the base stations enables the other base station to obtain synchronization information. These objects and others may be obtained by providing a first base station and a second base station and a method in the first base station and a method in the second base station according to the independent claims attached below.

According to an aspect a method in a first base station for enabling communication between the first base station and a second base station is provided. The method comprises detecting the second base station. The method further comprises sending a setup request message to the second base station upon detecting the second base station. The method further comprises receiving a setup response from the second base station, wherein at least one of the request and response messages comprise address information of a time server or information from which address information of a time server can be derived, which time server is to be used to synchronize the first base station with the second base station.

According to an aspect, a method in a second base station for enabling communication between the second base station and a first base station is provided. The method comprises receiving a setup request message from the first base station and sending a setup response message to the first base station upon the reception of the setup request message, wherein at least one of the request and response messages comprise address information of a time server or information from which address information of a time server can be derived, which time server is to be used to synchronize the second base station with the first base station.

According to still an aspect, a first base station adapted to enable communication between the first base station and a second base station is provided. The first base station comprises a processing unit adapted to detect the second base station and to send a setup request message to the second base station upon detection of the second base station. The processing unit is further adapted to receive a setup response message from the second base station, wherein at least one of the request and response messages comprise address information of a time server or information from which address information of a time server can be derived, which time server is to be used to synchronize the first base station with the second base station.

According to yet an aspect, a second base station adapted to enable communication between the second base station and a first base station is provided. The second base station comprises a processing unit adapted to receive a setup request message from the first base station and to send a setup response message to the first base station upon the reception of the setup request message, wherein at least one of the request and response messages comprise address information of a time server or information from which address information of a time server can be derived, which time server is to be used to synchronize the second base station with the first base station.

The first base station, the second base station and the respective method therein have several advantages. One advantage is that the two base stations can be configured automatically without manual intervention. There is no need to manually configure the time server to serve both base stations. This reduces operation and maintenance of configuring the time server information in the different base stations. Further, the base station not having information of the time server will automatically obtain this information from the base station having this information. As a consequence, the base station not initially having information of the time server will synchronise itself by means of the time server without manual intervention, thereby reducing operation and maintenance of configuring the base station. A further advantage is, for example, that the transport network will not consist of a plurality of "hops" between the low power node and the time server. Since the time servers are not centralised, no consideration needs to be taken to prioritisation of packets relating to synchronisation. Furthermore, no additional functionality in switches, routers and so on will be needed to regenerate synchronisation information as the macro base station either comprise a time server or is connected to a time server. Still further, it is ensured that the macro base station and the low power base station use the same time server to obtain synchronisation information or timing information.

### Brief description of drawings

Embodiments will now be described in more detail in relation to the accompanying drawings, in which:
Figure 1a is a flowchart of an exemplifying embodiment of a method in a first base station for enabling communication between the first base station and a second base station.
Figure 1b is a flowchart of another exemplifying embodiment of a method in a first base station for enabling communication between the first base station and a second base station.
Figure 2a is a flowchart of an exemplifying embodiment of a method in a second base station for enabling communication between the second base station and a first base station.
Figure 2b is a flowchart of another exemplifying embodiment of a method in a second base station for enabling communication between the second base station and a first base station.
Figure 3a is a block diagram schematically illustrating an exemplifying embodiment of a first and a second base station adapted to enable communication between the first base station and a second base station.
Figure 3b is a block diagram schematically illustrating another exemplifying embodiment of a first and a second base station adapted to enable communication between the first base station and a second base station.
Figure 4 is a schematic illustration of a cell having a macro base station and also comprising low power base stations.
Figure 5a is a schematic illustration of an exemplifying embodiment of a first base station, a second base station and a time server.
Figure 5b is a schematic illustration of another exemplifying embodiment of a first base station, a second base station and a time server.
Figure 6 is a signalling diagram of an exemplifying embodiment of a process for synchronizing a first and a second base station.

### Detailed description

Briefly described, exemplifying embodiment of a method in a first base station and in a second base station as well as a first base station and a second base station are provided for enabling communication between the first base station and the second base station. The enabling of communication between the first base station and the second base station is performed in such a way that one of the base stations provide the other base station with information on how to access a time server so that the base station can get synchronized and thereby execute communication between each other.

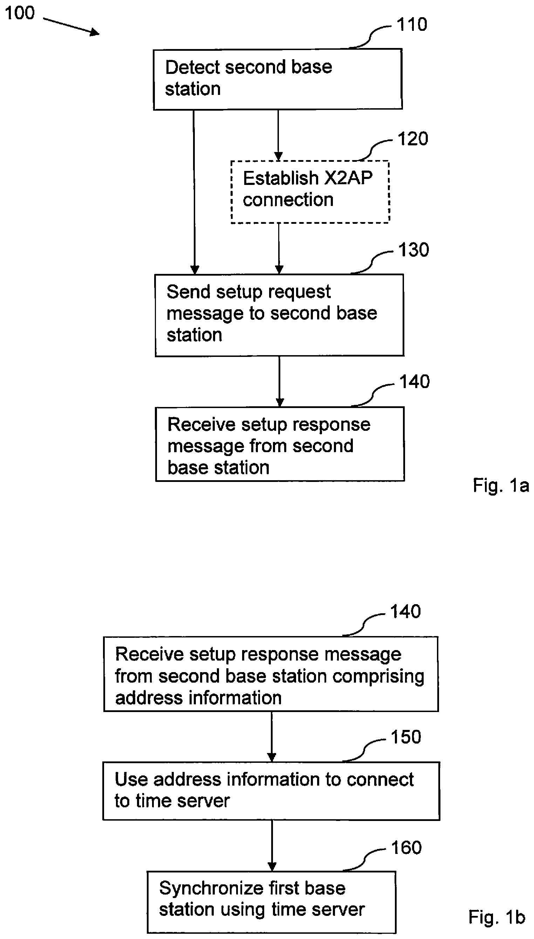

An exemplifying embodiment of such a method in a first base station will now be described with reference to the flowchart in figure 1a. In this embodiment, the method comprises detecting 110 the second base station. The method further comprises sending 130 a setup request message to the second base station upon detecting the second base station. The method further comprises receiving 140 a setup response from the second base station, wherein at least one of the request and response messages comprise address information of a time server or information from which address information of a time server can be derived, which time server is to be used to synchronize the first base station with the second base station.

This has several advantages. One advantage is that the two base stations can be configured automatically without manual intervention. There is no need to manually configure the time server to serve both base stations. This reduces operation and maintenance of configuring the time server information in the different base stations. Further, the base station not having information of the time server will automatically obtain this information from the base station having this information. As a consequence, the base station not initially having information of the time server will synchronise itself by means of the time server without manual intervention, thereby reducing operation and maintenance of configuring the base station.

According to an embodiment, the two base stations are in relation to each other such that one base station is a "higher hierarchy" base station and the other base station is a "lower hierarchy" base station, i.e. a low power base station. In other words, the "higher hierarchy" base station covers a first cell and the other base station covers a second cell, wherein the second cell is physically located in the first cell.

In an example of the method in the first base station, the first base station is a macro base station and the second base station is a low power base station configured to operate as any of: a relay base station, a micro base station, a pico base station, a home base station and a femto base station, or the like.

This means that the macro base station detects the low power base station. The macro base station is the one which has the address information of the time server or information from which address information of a time server can be derived.

According to an embodiment, the setup request message comprises address information of the time server or information from which address information of a time server can be derived, which time server is to be used to synchronize the first base station with the second base station.

In this way, the first base station, i.e. the macro ("higher hierarchy") base station, will provide the second base station, i.e. the low power ("lower hierarchy") base station with information such that the second base station will be able to access the time server in order to synchronize itself.

By synchronizing is intended obtaining timing or synchronizing information from the time server. So synchronizing the first base station with the second base station means that both base stations obtain the same timing information from the same time server. In other words, the two base stations do not necessarily need to exchange synchronization information with each other, but both will obtain timing information or synchronizing information from the same time server.

According to still an embodiment of the method in the first base station, the first base station is a low power base station configured to operate as any of: a relay base station, a micro base station, a pico base station, a home base station and a femto base station, and the second base station is a macro base station.

This means that it is the low power base station which detects the macro base station.

According to an embodiment, the setup request message comprises an indication that the first base station requests address information of the time server or information from which address information of the time server can be derived.

Since the low power base station does not have the address information of the time server or information from which address information of a time server can be derived, the low power base station must request this information from the macro base station. This is done by the low power base station requesting this information in the setup request message.

According to yet an embodiment, the setup response message comprises the address information of the time server or information from which address information of the time server can be derived, which time server is to be used to synchronize the first base station with the second base station.

In this way, the address information of the time server or information from which address information of the time server can be derived is obtained by the low power base station, by receiving this information from the macro base station. The low power base station is thereby enabled to contact the time server.

Figure 1b is a flowchart of another exemplifying embodiment of a method in a first base station for enabling communication between the first base station and a second base station

According to this embodiment of the method in a first base station, the method further comprises connecting 150 to the time server using the address information and synchronising 160 the first base station with the second base station by means of the time server.

After the first and second base station are synchronized, they are able to communicate with each other.

In an example, the address information comprises an IP address. In another example, the information from which address information of a time server can be derived comprises a Fully Qualified Domain Name, FQDN, to be used towards a Domain Name Server, DNS, or a multicast group address to be used to access the time server.

The information from which address information of a time server can be derived may also comprise choice of multicast or unicast and method to join the multicast group, for example Internet Group Management Protocol, IGMP, version.

Different addressing schemes or techniques may be employed in different communication networks. The base stations described above are typically used in a wireless communication network. Depending on the scheme or technique employed, the base stations need the corresponding information in order to obtain timing or synchronising information from the time server.

According to an embodiment, the method further comprises, after detecting 110 the second base station and before sending the setup request message to the second base station, establishing 120 a connection with the second base station.

In this example, the first base station detects the second base station, for example via over the air signaling without any physical connection. In such a case, the first base station may first establish a connection to the second base station, such that the two base stations subsequently employ a common communication protocol.

In another example the second base station is connected by wire to the first base station.

According to an embodiment, the connection is an X2 Application Protocol, X2AP, connection with the second base station.

According to an embodiment of the method in the first base station, the setup request message and setup response message are X2AP messages.

In an example, the wireless communication system is a Long Term Evolution, LTE, communication system. In an LTE system, the first base station and the second base station may communicate over the X2 interface using the X2 Application Protocol (X2AP). In the X2 interface and X2AP, the setup request message and setup response message are defined. In this case, these messages are extended with an optional parameter or information element to carry address information of a time server or information from which address information of a time server can be derived.

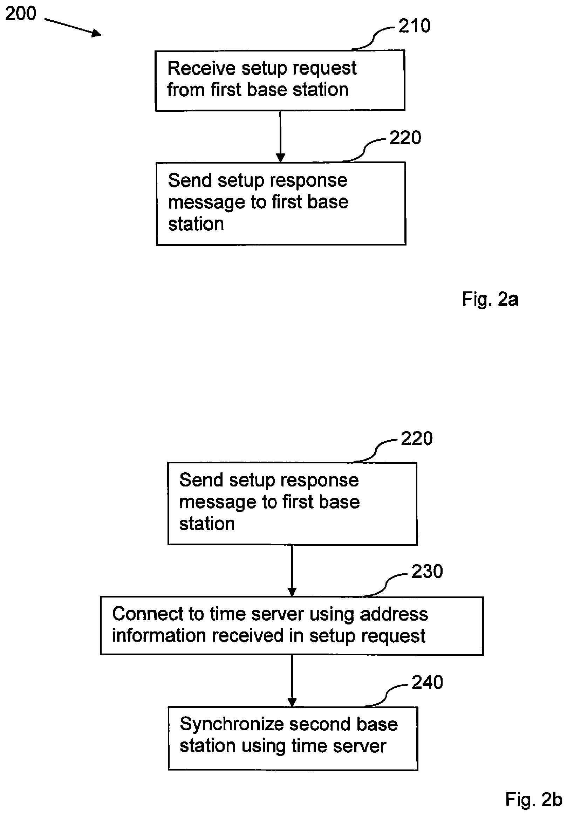

Figure 2a is a flowchart of an exemplifying embodiment of a method in a second base station for enabling communication between the second base station and a first base station.

According to an embodiment, the method in a second base station comprises receiving 210 a setup request message from the first base station and sending 220 a setup response message to the first base station upon the reception of the setup request message. At least one of the request and response messages comprise address information of a time server or information from which address information of a time server can be derived, which time server is to be used to synchronize the second base station with the first base station.

This has several advantages. One advantage is that the two base stations can be configured automatically without manual intervention. This reduces operation and maintenance of configuring the time server information in the different base stations. Further, the base station not having information of the time server will automatically obtain this information from the base station having this information. As a consequence, the base station not initially having information of the time server will synchronise itself by means of the time server without manual intervention, thereby reducing operation and maintenance of configuring the base station.

According to an embodiment of the method in the second base station, the first base station is a macro base station and the second base station is a low power base station configured to operate as any of: a relay base station, a micro base station, a pico base station, a home base station and a femto base station.

This means that the macro base station detects the low power base station. The macro base station is the one which has the address information of the time server or information from which address information of the time server can be derived. As the macro base station detects the low power base station, the macro base station sends 130 the setup request message to the low power base station upon detecting the second base station, as described above. It is this setup request message which is received 210 by the low power base station.

According to an embodiment of the method in the second base station, the setup request message comprises the address information of the time server or the information from which address information of a time server can be derived, which time server is to be used to synchronize the second base station with the first base station.

As was described above, it is the macro base station (the first base station in this example) which has the address information of the time server or the information from which address information of the time server can be derived. This is hereby transmitted to the low power base station (the second base station in this example).

Figure 2b is a flowchart of another exemplifying embodiment of a method in a second base station for enabling communication between the second base station and a first base station.

According to this embodiment of the method in the second base station, the method further comprises connecting 230 to the time server using the address information and synchronising 240 the second base station with the first base station by means of the time server.

According to yet an embodiment, the second base station is a macro base station and the first base station is a low power base station configured to operate as any of: a relay base station, a micro base station, a pico base station, a home base station and a femto base station.

This means that it is the first base station (the low power base station) which detects the second base station (the macro base station). This also means that it is the second base station which has the address information if the time server or the information from which address information of a time server can be derived.

According to an embodiment of the method in the second base station, the setup request message comprises an indication that the first base station (the low power base station) requests address information of the time server or information from which address information of the time server can be derived.

According to yet an embodiment, the setup response message comprises the address information of the time server or information from which address information of the time server can be derived, which time server is to be used to synchronize the first base station with the second base station.

In this way, the second base station, i.e. the macro base station, provides the first base station, i.e. the low power base station, with the address information of the time server or information from which address information of the time server can be derived.

According to still an embodiment in the second base station, the address information comprises an IP address; or said information from which address information of a time server can be derived comprises a Fully Qualified Domain name, FQDN, to be used towards a Domain Name Server, DNS, or a multicast group address to be used to access said time server.

According to an embodiment, the setup request message and the setup response message are X2AP messages.

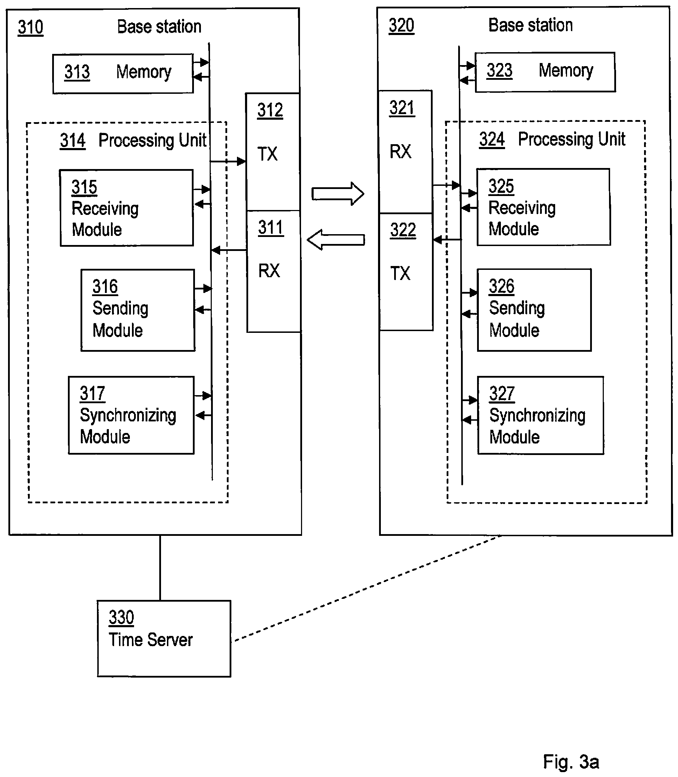

Figure 3a is a block diagram schematically illustrating an exemplifying embodiment of a first and a second base station adapted to enable communication between the first base station and a second base station.

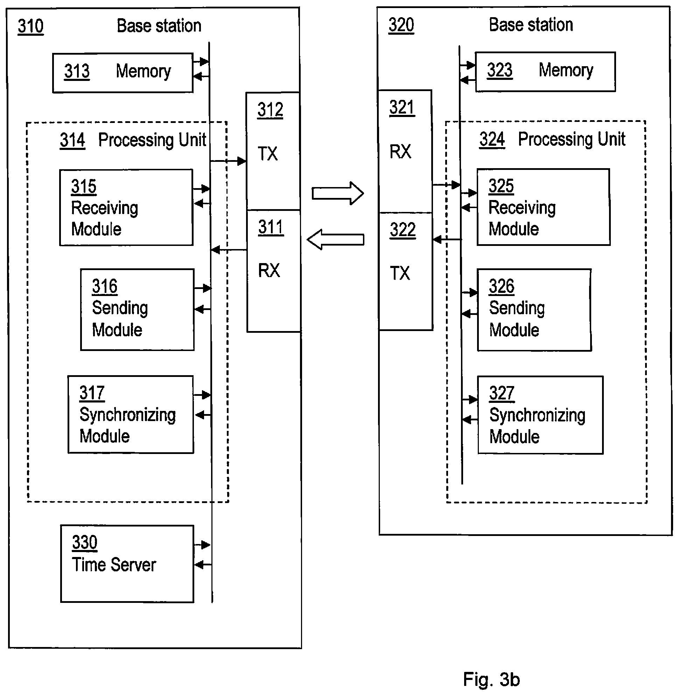

Figure 3b is a block diagram schematically illustrating another exemplifying embodiment of a first and a second base station adapted to enable communication between the first base station and a second base station.

Figures 3a and 3b will be described below. Because the first and second base station have the same objects, advantages and technical features as the respective method therein, the first and second base station will be described in brief to avoid unnecessary repetition.

Firstly, embodiments of the first base station will be described with reference to figures 3a and 3b.

According to an exemplifying embodiment of a first base station 310, 320 adapted to enable communication between the first base station and a second base station, the first base station comprises a processing unit (314, 324) adapted to detect the second base station and to send a setup request message to the second base station upon detection of the second base station. The processing unit (314, 324) is further adapted to receive a setup response message from the second base station, wherein at least one of the request and response messages comprise address information of a time server 330 or information from which address information of a time server 330 can be derived, which time server 330 is to be used to synchronize the first base station with the second base station.

According to an embodiment of the first base station, the first base station 310 is a macro base station and the second base station 320 is a low power base station configured to operate as any of: a relay base station, a micro base station, a pico base station, a home base station and a femto base station.

According to yet an embodiment, the setup request message comprises address information of the time server 330 or information from which address information of a time server 330 can be derived, which time server 330 is to be used to synchronize the first base station 310 with the second base station 320.

According to still an embodiment of the first base station, the time server 330 is either incorporated into the first base station 310 (see figure 3b) or directly connected to the first base station 310 (see figure 3a). In the case when the time server 330 is directly connected to the first base station 310 illustrated in figure 3a, the second base station 320 may access the time server 330 by setting up a connection to the time server, illustrated by the dotted line between the time server 330 and the second base station. In another example, the second base station 320 may access the time server 330 by means of the first base station 310 acting as a proxy, i.e. the second base station 320 will receive the timing/synchronisation information from the first base station 310.

According to an embodiment of the first base station, the first base station 320 is a low power base station configured to operate as any of: a relay base station, a micro base station, a pico base station, a home base station and a femto base station, and the second base station 310 is a macro base station.

In an example of the first base station, the setup request message comprises an indication that the first base station 320 requests address information of the time server 330 or information from which address information of the time server 330 can be derived.

According to an embodiment of the first base station, the setup response message comprises the address information of the time server 330 or information from which address information of the time server 330 can be derived, which time server 330 is to be used to synchronize the first base station 320 with the second base station 310.

According to still an embodiment of the first base station, the processing unit 314 is further adapted to connect to the time server 330 using the address information, and to synchronize the first base station 320 with said second base station 310 by means of the time server 330.

According to yet an embodiment, the address information comprises an IP address; or the information from which address information of the time server 330 can be derived comprises a Fully Qualified Domain name, FQDN, to be used towards a Domain Name Server, DNS, or a multicast group address to be used to access the time server 330.

According to an embodiment of the first base station, the processing unit 324 is further adapted to, after detecting the second base station and before sending the setup request message to the second base station, to establish a connection with the second base station.

According to an embodiment, the connection is an X2 Application Protocol, X2AP, connection with the second base station

In an example, the first base station, the setup request message and the setup response message are X2AP messages.

Below, embodiments of the second base station will be described with reference to figures 3a and 3b.

According to an exemplifying embodiment of the second base station 310, 320 adapted to enable communication between said second base station and a first base station, the second base station comprises a processing unit 314, 324 adapted to receive a setup request message from the first base station and to send a setup response message to the first base station upon the reception of the setup request message, wherein at least one of the request and response messages comprise address information of a time server 330 or information from which address information of a time server 330 can be derived, which time server 330 is to be used to synchronize the second base station with the first base station.

According to an embodiment of the second base station, the first base station 310 is a macro base station and the second base station 320 is a low power base station configured to operate as any of: a relay base station, a micro base station, a pico base station, a home base station and a femto base station.

According to still an embodiment, the setup request message comprises the address information of the time server 330 or information from which address information of the time server 330 can be derived, which time server 330 is to be used to synchronize the second base station 320 with the first base station 310.

According to yet an embodiment, the processing unit 324 is further adapted to connect to the time server 330 using the address information of the time server 330 or information from which address information of the time server 330 can be derived, and to synchronise the second base station 320 with the first base station 310 by means of the time server 330.

According to a further embodiment, the second base station 310 is a macro base station and the first base station 320 is a low power base station configured to operate as any of: a relay base station, a micro base station, a pico base station, a home base station and a femto base station.

According to yet an embodiment of the second base station, the setup request message comprises an indication that the first base station 320 requests address information of the time server 330 or information from which address information of the time server 330 can be derived.

Still further, in an example of the second base station, the setup response message comprises the address information of the time server 330 or information from which address information of the time server 330 can be derived, which time server 330 is to be used to synchronize the first base station 320 with the second base station 310.

According to an embodiment, the address information comprises an IP address of the time server 330; or the information from which address information of a time server 330 can be derived comprises a Fully Qualified Domain name, FQDN, to be used towards a Domain Name Server, DNS, or a multicast group address to be used to access the time server 330.

In an example of the second base station, the setup request message and the setup response message are X2AP messages

Further, according to an embodiment, the time server 330 is either incorporated into the second base station 310 or directly connected to the second base station 310.

The exemplifying embodiments of the first and second base stations and the respective methods therein provide several advantages, some have already been mentioned. A further advantage is, for example, that transport network will not consist of a plurality of "hops" between the low power node and the time server. Since the time servers are not centralised, no consideration needs to be taken to prioritisation of packets relating to synchronisation. If there would be only a few centralised time servers, packets related to synchronisation would need to be prioritised in the network in order to not delay such packets which would have a disadvantageous affect on the synchronisation. Some communication networks do not even support prioritisation of packets. Furthermore, no additional functionality in switches, routers and so on will be needed to regenerate synchronisation information as the time server according to the exemplifying embodiments described above disclose that the macro base station either comprise a time server or is connected to a time server. Still further, it is ensured that the macro base station and the low power base station use the same time server to obtain synchronisation information or timing information, thereby it can be said that the macro base station and the low power base station synchronise with each other.

For clarity reasons, it shall also be noted that a time server may serve a plurality of macro base stations.

According to an example, the time server comprises a Global Positioning System, GPS, unit in order to provide timing information or synchronisation information to the first and the second base station.

Figures 3a and 3b both schematically disclose the first and the second base station comprising a processing unit 314 and 324. Each processing unit 314, 324 comprise dedicated modules 315-317 and 325-327 for receiving, sending and synchronizing the respective base station. Each base station is also illustrated comprising a respective memory 313, 323. The memory can be used to store different data and information. One such piece of information that can be stored in respective memory is timing information or synchronisation information obtained from the time server 330. Each base station is also illustrated comprising transmitting and receiving arrangements 311, 312, 321, 322. The transmitting arrangement can be employed to communicate to user equipments being served be respective base station and also to communicate to the other base station and also to the time server. It shall be noted that the transmitting and receiving arrangement may use different communication interfaces depending on the entity to which it is communicating. If the base station is communicating with a user equipment, the communication interface is typically a wireless communication interface employing e.g. a specific wavelength, frequency, coding or time multiplexing. If the base station is communicating with the other base station or the time server, the communication interface may be different, it may be wirelessly or by wire, it may employ the same or different specific wavelength, frequency, coding or time multiplexing.

Figure 5a and 5b schematic illustrate two exemplifying embodiments of a first base station, a second base station and a time server. These two embodiments correspond to the embodiments illustrated in figures 3a and 3b, namely that the time server can either be incorporated in the macro base station or the time server is a separate node from the macro base station. In both embodiments, the macro base station and the low power base station use the same time server to obtain synchronisation information.

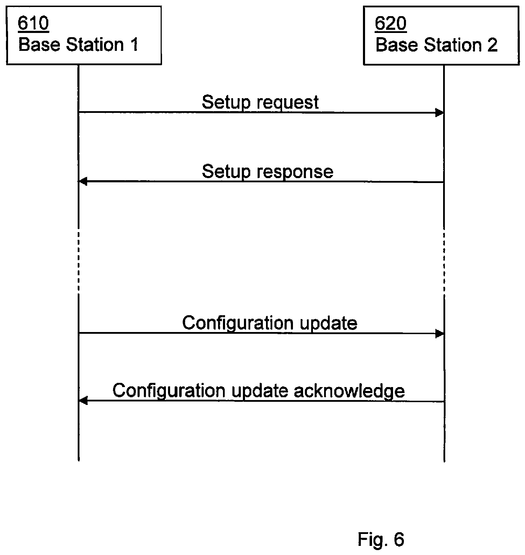

In the exemplifying embodiments of the method in the first base station and the method in the second base station, there might arise a situation in with it is desirable or needed to update or change the time server information. This is illustrated by the signalling diagram of figure 6. In figure 6, a first base station 610 and a second base station 620 first synchronise by exchanging address information of a time server or information from which address information of a time server can be derived, which time server is to be used to synchronize the first base station with the second base station. This has been described in detail above. Then after some time, an update is performed. This update is performed by, in this example, the first base station 610 sending a configuration update message to the second base station 620. The second base station 620 responds to the first base station 610 by sending a configuration update acknowledge message. Again, in the X2 interface and X2AP protocol, the configuration update message and configuration update acknowledge message are defined. In this case, these messages are extended with an optional parameter or information element to carry address information of a time server or information from which address information of a time server can be derived.

In an example, the protocol to be used for the time server is NTP or PTP.

In yet an example, in the X2 interface and X2AP protocol, the setup request message, the setup response message, the configuration update message and configuration update acknowledge message are also extended with optional parameters or information elements to carry information about the protocol to be used for the time server, the transport protocol level port number (e.g. User Datagram Protocol, UDP-port number) and Quality of Service, QoS, settings to be used in the uplink direction.

It should be noted that figures 3a and 3b merely illustrate various functional modules and functional units in the base stations in a logical sense. The functions in practice may be implemented using any suitable software and hardware means/circuits etc. Thus, the embodiments are generally not limited to the shown structures of the base stations and the functional modules and units. Hence, the previously described exemplary embodiments may be realised in many ways. For example, one embodiment includes a computer-readable medium having instructions stored thereon that are executable by the base stations for performing the respective method therein. The instructions executable by the computing system and stored on the computer-readable medium perform the method steps of the exemplifying embodiments as set forth in the claims.

While the embodiments have been described in terms of several embodiments, it is contemplated that alternatives, modifications, permutations and equivalents thereof will become apparent upon reading of the specifications and study of the drawings. It is therefore intended that the following appended claims include such alternatives, modifications, permutations and equivalents as fall within the scope of the embodiments and defined by the pending claims.

## Claims

1. A method (100) in a first base station for enabling communication between said first base station and a second base station, the method (100) **characterized by**:
- detecting (110) said second base station,
- sending (130) a setup request message to said secondbase station upon the detection of said second base station,
- receiving (140) a setup response message from said second base station,
wherein at least one of said setup request and setup response messages comprise address information of a time server or information from which said address information of a time server can be derived, which time server is to be used to synchronize said first base station with said second base station.

2. A method (100) in a first base station according to claim 1, wherein said first base station is a macro base station and said second base station is a low power base station configured to operate as any of: a relay base station, a micro base station, a pico base station, a home base station and a femto base station, and said setup request message comprises said address information of said time server or information from which said address information of said time server can be derived, which time server is to be used to synchronize said first base station with said second base station.

3. A method (100) in a first base station according to claim 1, wherein said first base station is a low power base station configured to operate as any of: a relay base station, a micro base station a pico base station, a home base station and a femto base station, and said second base station is a macro base station, and wherein said setup request message comprises an indication that said first base station requests said address information of said time server or information from which said address information of said time server can be derived and said setup response message comprises said address information of said time server or information from which said address information of said time server can be derived, which time server is to be used to synchronize said first base station with said second base station..

4. A method (100) in a first base station according to claim 3, further comprising:
- connecting (150) to said time server using said address information, and
- synchronizing (160) said first base station with said second base station by means of said time server.

5. A method (100) in a first base station according to any of claims 1-4, wherein said address information comprises an IP address; or said information from which address information of said time server can be derived comprises a Fully Qualified Domain name, FQDN, to be used towards a Domain Name Server, DNS, or a multicast group address to be used to access said time server.

6. A method (200) in a second base station for enabling communication between said second base station and a first base station, the method (200) **characterized by**:
- receiving (210) a setup request message from said first base station,
- sending (220) a setup response message to said first base station upon the reception of said setup request message,
wherein at least one of said setup request and setup response messages comprise address information of a time server or information from which said address information of a time server can be derived, which time server is to be used to synchronize said second base station with said first base station.

7. A method (200) in a second base station according to claim 6, wherein said first base station is a macro base station and said second base station is a low power base station configured to operate as any of: a relay base station, a micro base station, a pico base station, a home base station and a femto base station, and said setup request message comprises said address information of said time server or the information from which said address information of the time server can be derived, which time server is to be used to synchronize said first base station with said second base station.

8. A method (200) in a second base station according to claim 6, wherein said second base station is a macro base station and said first base station is a low power base station configured to operate as any of: a relay base station, a micro base station, a pico base station, a home base station and a femto base station, and wherein said setup request message comprises an indication that said first base station requests said address information of said time server or information from which said address information of said time server can be derived and said setup response message comprises said address information of said time server or information from which said address information of said time server can be derived, which time server is to be used to synchronize said first base station with said second base station.

9. A first base station (310, 320) adapted to enable communication between said first base station (310, 320) and a second base station, the first base station (310, 320) **characterized by** a processing unit (314, 324) adapted to:
- detect said second base station,
- send a setup request message to said second base station upon detection of said second base station,
- receive a setup response message from said second base station,
wherein at least one of said setup request and setup response messages comprise address information of a time server (330) or information from which said address information of a time server (330) can be derived, which time server (330) is to be used to synchronize said first base station (310, 320) with said second base station.

10. A first base station (310) according to claim 9, wherein said first base station (310) is a macro base station and said second base station (320) is a low power base station configured to operate as any of: a relay base station, a micro base station, a pico base station, a home base station and a femto base station, and said setup request message comprises said said address information of said time server (330) or information from which said address information of said time server (330) can be derived, which time server (330) is to be used to synchronize said first base station (310) with said second base station (320), and wherein said time server (330) is either incorporated into said first base station (310) or directly connected to said first base station (310).

11. A first base (320) station according to claim 9, wherein said first base station (320) is a low power base station configured to operate as any of: a relay base station, a micro base station, a pico base station, a home base station and a femto base station, and said second base station (310) is a macro base station, and wherein said setup request message comprises an indication that said first base station (320) requests said address information of said time server (330) or information from which said address information of said time server (330) can be derived, and said setup response message comprises said address information of said time server (330) or information from which said address information of said time server (330) can be derived, which time server (330) is to be used to synchronize said first base station (320) with said second base station (310).

12. A first base station (320) according to claim 11, wherein said processing unit (324) further is adapted to:
- connect to said time server (330) using said address information, and
- synchronise said first base station (320) with said second base station (310) by means of said time server (330).

13. A second base station (310, 320) adapted to enable communication between said second base station (310, 320) and a first base station, the second base station (310, 320) **characterized by** a processing unit (314, 324) adapted to:
- receive a setup request message from said first base station,
- send a setup response message to said first base station upon the reception of said setup request message,
wherein at least one of said request and response messages comprise address information of a time server (330) or information from which said address information of a time server (330) can be derived, which time server (330) is to be used to synchronize said second base station (310, 320) with said first base station.

14. A second base station (320) according to claim 13, wherein said first base station (310) is a macro base station and said second base station (320) is a low power base station configured to operate as any of: a relay base station, a micro base station, a pico base station, a home base station and a femto base station, and wherein said setup request message comprises said address information of said time server (330) or information from which said address information of said time server (330) can be derived, which time server (330) is to be used to synchronize said first base station (310) with said second base station (320).

15. A second base station (320) according to claim 14, wherein said processing unit (324) is further adapted to:
- connect to said time server (330) using said address information of said time server (330) or information from which said address information of said time server (330) can be derived, and
- synchronise said second base station (320) with said first base station (310) by means of said time server (330).

## Patentansprüche

1. Verfahren (100) in einer ersten Basisstation zum Ermöglichen einer Kommunikation zwischen der ersten Basisstation und einer zweiten Basisstation, wobei das Verfahren (100) **gekennzeichnet ist durch**:
- Erkennen (110) der zweiten Basisstation,
- Senden (130) einer Aufbauanforderungsnachricht an die zweite Basisstation bei dem Erkennen der zweiten Basisstation,
- Empfangen (140) einer Aufbauantwortnachricht von der zweiten Basisstation,
wobei mindestens eine von der Aufbauanforderungsnachricht und der Aufbauantwortnachricht Adressinformationen eines Zeitservers oder Informationen, aus denen die Adressinformationen eines Zeitservers abgeleitet werden können, umfasst, wobei der Zeitserver zu verwenden ist, um die erste Basisstation mit der zweiten Basisstation zu synchronisieren.

2. Verfahren (100) in einer ersten Basisstation nach Anspruch 1, wobei die erste Basisstation eine Makrobasisstation ist und die zweite Basisstation eine Basisstation mit geringer Leistung ist, die dazu konfiguriert ist, als eine von folgenden zu arbeiten: eine Relaisbasisstation, eine Mikrobasisstation, eine Pico-Basisstation, eine Heimatbasisstation und eine Femto-Basisstation, und wobei die Aufbauanforderungsnachricht die Adressinformationen des Zeitservers oder Informationen, aus denen die Adressinformationen des Zeitservers abgeleitet werden können, umfasst, wobei der Zeitserver zu verwenden ist, um die erste Basisstation mit der zweiten Basisstation zu synchronisieren.

3. Verfahren (100) in einer ersten Basisstation nach Anspruch 1, wobei die erste Basisstation eine Basisstation mit geringer Leistung ist, die dazu konfiguriert ist, als eine von folgenden zu arbeiten: eine Relaisbasisstation, eine Mikrobasisstation, eine Pico-Basisstation, eine Heimatbasisstation und eine Femto-Basisstation, und die zweite Basisstation eine Makrobasisstation ist, und wobei die Aufbauanforderungsnachricht einen Hinweis umfasst, dass die erste Basisstation die Adressinformationen des Zeitservers oder Informationen, aus denen die Adressinformationen des Zeitservers abgeleitet werden können, anfordert, und die Aufbauantwortnachricht die Adressinformationen des Zeitservers oder Informationen, aus denen die Adressinformationen des Zeitservers abgeleitet werden können, umfasst, wobei der Zeitserver zu verwenden ist, um die erste Basisstation mit der zweiten Basisstation zu synchronisieren.

4. Verfahren (100) in einer ersten Basisstation nach Anspruch 3, ferner umfassend:
- Verbinden (150) mit dem Zeitserver unter Verwendung der Adressinformationen, und
- Synchronisieren (160) der ersten Basisstation mit der zweiten Basisstation mittels des Zeitservers.

5. Verfahren (100) in einer ersten Basisstation nach einem der Ansprüche 1 bis 4, wobei die Adressinformationen eine IP-Adresse umfassen; oder die Informationen, aus denen Adressinformationen des Zeitservers abgeleitet werden können, einen vollständig qualifizierten Domainnamen (Fully Qualified Domain Name - FQDN) zum Verwenden in Richtung eines Domainnamenservers (Domain Name Server - DNS) oder eine Multicast-Gruppenadresse zum Verwenden für ein Zugreifen auf den Zeitserver, umfassen.

6. Verfahren (200) in einer zweiten Basisstation zum Ermöglichen einer Kommunikation zwischen der zweiten Basisstation und einer ersten Basisstation, wobei das Verfahren (200) **gekennzeichnet ist durch**:
- Empfangen (210) einer Aufbauanforderungsnachricht von der ersten Basisstation,
- Senden (220) einer Aufbauantwortnachricht an die erste Basisstation bei Empfang der Aufbauanforderungsnachricht,
wobei mindestens eine von der Aufbauanforderungsnachricht und der Aufbauantwortnachricht Adressinformationen eines Zeitservers oder Informationen, aus denen die Adressinformationen eines Zeitservers abgeleitet werden können, umfasst, wobei der Zeitserver zu verwenden ist, um die zweite Basisstation mit der ersten Basisstation zu synchronisieren.

7. Verfahren (200) in einer zweiten Basisstation nach Anspruch 6, wobei die erste Basisstation eine Makrobasisstation ist und die zweite Basisstation eine Basisstation mit geringer Leistung ist, die dazu konfiguriert ist, als eine von folgenden zu arbeiten: eine Relaisbasisstation, eine Mikrobasisstation, eine Pico-Basisstation, eine Heimatbasisstation und eine Femto-Basisstation, und wobei die Aufbauanforderungsnachricht die Adressinformationen des Zeitservers oder die Informationen, aus denen die Adressinformationen des Zeitserver abgeleitet werden können, umfasst, wobei der Zeitserver zu verwenden ist, um die erste Basisstation mit der zweiten Basisstation zu synchronisieren.

8. Verfahren (200) in einer zweiten Basisstation nach Anspruch 6, wobei die zweite Basisstation eine Makrobasisstation ist und die erste Basisstation eine Basisstation mit geringer Leistung ist, die dazu konfiguriert ist, als eine von folgenden zu arbeiten: eine Relaisbasisstation, eine Mikrobasisstation, eine Pico-Basisstation, eine Heimatbasisstation und eine Femto-Basisstation, und wobei die Aufbauanforderungsnachricht einen Hinweis umfasst, dass die erste Basisstation die Adressinformationen des Zeitservers oder Informationen, aus denen die Adressinformationen des Zeitservers abgeleitet werden können, anfordert, und die Aufbauantwortnachricht die Adressinformationen des Zeitservers oder Informationen, aus denen die Adressinformationen des Zeitservers abgeleitet werden können, umfasst, wobei der Zeitserver zu verwenden ist, um die erste Basisstation mit der zweiten Basisstation zu synchronisieren.

9. Erste Basisstation (310, 320), ausgelegt zum Ermöglichen einer Kommunikation zwischen der ersten Basisstation (310, 320) und einer zweiten Basisstation, wobei die erste Basisstation (310, 320) **gekennzeichnet ist durch** eine Verarbeitungseinheit (314, 324), die ausgelegt ist, um:
- die zweite Basisstation zu erkennen,
- eine Aufbauanforderungsnachricht an die zweite Basisstation bei Erkennen der zweiten Basisstation zu senden,
- eine Aufbauantwortnachricht von der zweiten Basisstation zu empfangen,
wobei mindestens eine von der Aufbauanforderungsnachricht und der Aufbauantwortnachricht Adressinformationen eines Zeitservers (330) oder Informationen, aus denen die Adressinformationen eines Zeitservers (330) abgeleitet werden können, umfasst, wobei der Zeitserver (330) zu verwenden ist, um die erste Basisstation (310, 320) mit der zweiten Basisstation zu synchronisieren.

10. Erste Basisstation (310) nach Anspruch 9, wobei die erste Basisstation (310) eine Makrobasisstation ist und die zweite Basisstation (320) eine Basisstation mit geringer Leistung ist, die dazu konfiguriert ist, als eine von folgenden zu arbeiten: eine Relaisbasisstation, eine Mikrobasisstation, eine Pico-Basisstation, eine Heimatbasisstation und eine Femto-Basisstation, und wobei die Aufbauanforderungsnachricht die Adressinformationen des Zeitservers (330) oder Informationen, aus denen die Adressinformationen des Zeitservers (330) abgeleitet werden können, umfasst, wobei der Zeitserver (330) zu verwenden ist, um die erste Basisstation (310) mit der zweiten Basisstation (320) zu synchronisieren, und wobei der Zeitserver (330) entweder in der ersten Basisstation (310) enthalten ist oder direkt mit der ersten Basisstation (310) verbunden ist.

11. Erste Basisstation (320) nach Anspruch 9, wobei die erste Basisstation (320) eine Basisstation mit geringer Leistung ist, die dazu konfiguriert ist, als eine von folgenden zu arbeiten: eine Relaisbasisstation, eine Mikrobasisstation, eine Pico-Basisstation, eine Heimatbasisstation und eine Femto-Basisstation, und die zweite Basisstation (310) eine Makrobasisstation ist, und wobei die Aufbauanforderungsnachricht einen Hinweis umfasst, dass die erste Basisstation (320) die Adressinformationen des Zeitserver (330) oder Informationen, aus denen die Adressinformationen des Zeitservers (330) abgeleitet werden können, anfordert, und die Aufbauantwortnachricht die Adressinformationen des Zeitservers (330) oder Informationen, aus denen die Adressinformationen des Zeitserver (330) abgeleitet werden können, umfasst, wobei der Zeitserver (330) zu verwenden ist, um die erste Basisstation (320) mit der zweiten Basisstation (310) zu synchronisieren.

12. Erste Basisstation (320) nach Anspruch 11, wobei die Verarbeitungseinheit (324) ferner ausgelegt ist, um:
- mit dem Zeitserver (330) unter Verwendung der Adressinformationen zu verbinden, und
- die erste Basisstation (320) mit der zweiten Basisstation (310) mittels des Zeitservers (330) zu synchronisieren.

13. Zweite Basisstation (310, 320), ausgelegt zum Ermöglichen einer Kommunikation zwischen der zweiten Basisstation (310, 320) und einer ersten Basisstation, wobei die zweite Basisstation (310, 320) **gekennzeichnet ist durch** eine Verarbeitungseinheit (314, 324), die ausgelegt ist, um:
- eine Aufbauanforderungsnachricht von der ersten Basisstation zu empfangen,
- eine Aufbauantwortnachricht an die erste Basisstation bei Empfang der Aufbauanforderungsnachricht zu senden,
wobei mindestens eine von der Anforderungsnachricht und der Antwortnachricht Adressinformationen eines Zeitservers (330) oder Informationen, aus denen die Adressinformationen eines Zeitservers (330) abgeleitet werden können, umfasst, wobei der Zeitserver (330) zu verwenden ist, um die zweite Basisstation (310, 320) mit der ersten Basisstation zu synchronisieren.

14. Zweite Basisstation (320) nach Anspruch 13, wobei die erste Basisstation (310) eine Makrobasisstation ist und die zweite Basisstation (320) eine Basisstation mit geringer Leistung ist, die dazu konfiguriert ist, als eine von folgenden zu arbeiten: eine Relaisbasisstation, eine Mikrobasisstation, eine Pico-Basisstation, eine Heimatbasisstation und eine Femto-Basisstation, und wobei die Aufbauanforderungsnachricht die Adressinformationen des Zeitservers (330) oder Informationen, aus denen die Adressinformationen des Zeitservers (330) abgeleitet werden können, umfasst, wobei der Zeitserver (330) zu verwenden ist, um die erste Basisstation (310) mit der zweiten Basisstation (320) zu synchronisieren.

15. Zweite Basisstation (320) nach Anspruch 14, wobei die Verarbeitungseinheit (324) ferner ausgelegt ist, um:
- mit dem Zeitserver (330) unter Verwendung der Adressinformationen des Zeitservers (330) oder Informationen, aus denen die Adressinformationen des Zeitserver (330) abgeleitet werden können, zu verbinden, und
- die zweite Basisstation (320) mit der ersten Basisstation (310) mittels des Zeitservers (330) zu synchronisieren.

## Revendications

1. Procédé (100) dans une première station de base pour permettre la communication entre ladite première station de base et une seconde station de base, le procédé (100) **caractérisé par** :
- la détection (110) de ladite seconde station de base,
- l'envoi (130) d'un message de demande d'établissement à ladite seconde station de base lors de la détection de ladite seconde station de base,
- la réception (140) d'un message de réponse d'établissement provenant de ladite seconde station de base,
dans lequel au moins un desdits messages de demande d'établissement et de réponse d'établissement comprennent des informations d'adresse d'un serveur temporel ou des informations desquelles lesdites informations d'adresse d'un serveur temporel peuvent être tirées, lequel serveur temporel doit être utilisé pour synchroniser ladite première station de base avec ladite seconde station de base.

2. Procédé (100) dans une première station de base selon la revendication 1, dans lequel ladite première station de base est une station de base macro et ladite seconde station de base est une station de base à faible puissance configurée pour fonctionner comme l'une quelconque parmi : une station de base relais, une station de base micro, une station de base pico, une station de base de rattachement et une station de base femto, et ledit message de demande d'établissement comprend lesdites informations d'adresse dudit serveur temporel ou des informations desquelles lesdites informations d'adresse dudit serveur temporel peuvent être tirées, lequel serveur temporel doit être utilisé pour synchroniser ladite première station de base avec ladite seconde station de base.

3. Procédé (100) dans une première station de base selon la revendication 1, dans lequel ladite première station de base est une station de base à faible puissance configurée pour fonctionner comme l'une quelconque parmi : une station de base relais, une station de base micro, une station de base pico, une station de base de rattachement et une station de base femto, et ladite seconde station de base est une station de base macro, et dans lequel ledit message de demande d'établissement comprend une indication que ladite première station de base demande lesdites informations d'adresse dudit serveur temporel ou des informations desquelles lesdites informations d'adresse dudit serveur temporel peuvent être tirées et ledit message de réponse d'établissement comprend lesdites informations d'adresse dudit serveur temporel ou des informations desquelles lesdites informations d'adresse dudit serveur temporel peuvent être tirées, lequel serveur temporel doit être utilisé pour synchroniser ladite première station de base avec ladite seconde station de base.

4. Procédé (100) dans une première station de base selon la revendication 3, comprenant en outre :
- la connexion (150) audit serveur temporel en utilisant lesdites informations d'adresse, et
- la synchronisation (160) de ladite première station de base avec ladite seconde station de base au moyen dudit serveur temporel.

5. Procédé (100) dans une première station de base selon l'une quelconque des revendications 1 à 4, dans lequel lesdites informations d'adresse comprennent une adresse IP ; ou lesdites informations desquelles les informations d'adresse dudit serveur temporel peuvent être tirées comprennent un nom de domaine complet, FQDN, devant être utilisé vers un serveur de noms de domaine, DNS, ou une adresse de groupe de multidestination devant être utilisée pour accéder audit serveur temporel.

6. Procédé (200) dans une seconde station de base pour permettre la communication entre ladite seconde station de base et une première station de base, le procédé (200) **caractérisé par** :
- la réception (210) d'un message de demande d'établissement provenant de ladite première station de base,
- l'envoi (220) d'un message de réponse d'établissement à ladite première station de base lors de la réception dudit message de demande d'établissement,
dans lequel au moins un desdits messages de demande d'établissement et de réponse d'établissement comprennent des informations d'adresse d'un serveur temporel ou des informations desquelles lesdites informations d'adresse d'un serveur temporel peuvent être tirées, lequel serveur temporel doit être utilisé pour synchroniser ladite seconde station de base avec ladite première station de base.

7. Procédé (200) dans une seconde station de base selon la revendication 6, dans lequel ladite première station de base est une station de base macro et ladite seconde station de base est une station de base à faible puissance configurée pour fonctionner comme l'une quelconque parmi : une station de base relais, une station de base micro, une station de base pico, une station de base de rattachement et une station de base femto, et ledit message de demande d'établissement comprend lesdites informations d'adresse dudit serveur temporel ou les informations desquelles lesdites informations d'adresse du serveur temporel peuvent être tirées, lequel serveur temporel doit être utilisé pour synchroniser ladite première station de base avec ladite seconde station de base.

8. Procédé (200) dans une seconde station de base selon la revendication 6, dans lequel ladite seconde station de base est une station de base macro et ladite première station de base est une station de base à faible puissance configurée pour fonctionner comme l'une quelconque parmi : une station de base relais, une station de base micro, une station de base pico, une station de base de rattachement et une station de base femto, et dans lequel ledit message de demande d'établissement comprend une indication que ladite première station de base demande lesdites informations d'adresse dudit serveur temporel ou des informations desquelles lesdites informations d'adresse dudit serveur temporel peuvent être tirées et ledit message de réponse d'établissement comprend lesdites informations d'adresse dudit serveur temporel ou des informations desquelles lesdites informations d'adresse dudit serveur temporel peuvent être tirées, lequel serveur temporel doit être utilisé pour synchroniser ladite première station de base avec ladite seconde station de base.

9. Première station de base (310, 320) adaptée pour permettre la communication entre ladite première station de base (310, 320) et une seconde station de base, la première station de base (310, 320) **caractérisée par** une unité de traitement (314, 324) adaptée pour :
- détecter ladite seconde station de base,
- envoyer un message de demande d'établissement à ladite seconde station de base lors de la détection de ladite seconde station de base,
- recevoir un message de réponse d'établissement provenant de ladite seconde station de base,
dans laquelle au moins un desdits messages de demande d'établissement et de réponse d'établissement comprennent des informations d'adresse d'un serveur temporel (330) ou des informations desquelles lesdites informations d'adresse d'un serveur temporel (330) peuvent être tirées, lequel serveur temporel (330) doit être utilisé pour synchroniser ladite première station de base (310, 320) avec ladite seconde station de base.

10. Première station de base (310) selon la revendication 9, dans laquelle ladite première station de base (310) est une station de base macro et ladite seconde station de base (320) est une station de base à faible puissance configurée pour fonctionner comme l'une quelconque parmi : une station de base relais, une station de base micro, une station de base pico, une station de base de rattachement et une station de base femto, et ledit message de demande d'établissement comprend lesdites informations d'adresse dudit serveur temporel (330) ou des informations desquelles lesdites informations d'adresse dudit serveur temporel (330) peuvent être tirées, lequel serveur temporel (330) doit être utilisé pour synchroniser ladite première station de base (310) avec ladite seconde station de base (320), et dans laquelle ledit serveur temporel (330) est soit incorporé dans ladite première station de base (310) ou directement connecté à ladite première station de base (310).

11. Première station de base (320) selon la revendication 9, dans laquelle ladite première station de base (320) est une station de base à faible puissance configurée pour fonctionner comme l'une quelconque parmi : une station de base relais, une station de base micro, une station de base pico, une station de base de rattachement et une station de base femto, et ladite seconde station de base (310) est une station de base macro, et dans laquelle ledit message de demande d'établissement comprend une indication que ladite première station de base (320) demande lesdites informations d'adresse dudit serveur temporel (330) ou des informations desquelles lesdites informations d'adresse dudit serveur temporel (330) peuvent être tirées, et ledit message de réponse d'établissement comprend lesdites informations d'adresse dudit serveur temporel (330) ou des informations desquelles lesdites informations d'adresse dudit serveur temporel (330) peuvent être tirées, lequel serveur temporel (330) doit être utilisé pour synchroniser ladite première station de base (320) avec ladite seconde station de base (310).

12. Première station de base (320) selon la revendication 11, dans laquelle ladite unité de traitement (324) est en outre adaptée pour :
- se connecter audit serveur temporel (330) en utilisant lesdites informations d'adresse, et
- synchroniser ladite première station de base (320) avec ladite seconde station de base (310) au moyen dudit serveur temporel (330).

13. Seconde station de base (310, 320) adaptée pour permettre la communication entre ladite seconde station de base (310, 320) et une première station de base, la seconde station de base (310, 320) **caractérisée par** une unité de traitement (314, 324) adaptée pour :
- recevoir un message de demande d'établissement provenant de ladite première station de base,
- envoyer un message de réponse d'établissement à ladite première station de base lors de la réception dudit message de demande d'établissement,
dans laquelle au moins un desdits messages de demande et de réponse comprennent des informations d'adresse d'un serveur temporel (330) ou des informations desquelles lesdites informations d'adresse d'un serveur temporel (330) peuvent être tirées, lequel serveur temporel (330) doit être utilisé pour synchroniser ladite seconde station de base (310, 320) avec ladite première station de base.

14. Seconde station de base (320) selon la revendication 13, dans laquelle ladite première station de base (310) est une station de base macro et ladite seconde station de base (320) est une station de base à faible puissance configurée pour fonctionner comme l'une quelconque parmi : une station de base relais, une station de base micro, une station de base pico, une station de base de rattachement et une station de base femto, et dans laquelle ledit message de demande d'établissement comprend lesdites informations d'adresse dudit serveur temporel (330) ou des informations desquelles lesdites informations d'adresse dudit serveur temporel (330) peuvent être tirées, lequel serveur temporel (330) doit être utilisé pour synchroniser ladite première station de base (310) avec ladite seconde station de base (320).

15. Seconde station de base (320) selon la revendication 14, dans laquelle ladite unité de traitement (324) est en outre adaptée pour :
- se connecter audit serveur temporel (330) en utilisant lesdites informations d'adresse dudit serveur temporel (330) ou des informations desquelles lesdites informations d'adresse dudit serveur temporel (330) peuvent être tirées, et
- synchroniser ladite seconde station de base (320) avec ladite première station de base (310) au moyen dudit serveur temporel (330).
